Europäisches Patentamt

European Patent Office

Office européen des brevets

(19)

(11)  EP 0 779 607 A1

(12)  **EUROPÄISCHE PATENTANMELDUNG**

(43) Veröffentlichungstag:
**18.06.1997 Patentblatt 1997/25**

(51) Int. Cl.⁶: $G08C\ 19/46$

(21) Anmeldenummer: 96119215.0

(22) Anmeldetag: **29.11.1996**

(84) Benannte Vertragsstaaten:
**AT CH DE ES FR GB IT LI SE**

(30) Priorität: **12.12.1995 DE 29519716 U**

(71) Anmelder: **SIEMENS AKTIENGESELLSCHAFT**
**80333 München (DE)**

(72) Erfinder:
• **Vogt, Hartmut, Dipl.-Ing.**
  **91074 Herzogenaurach (DE)**
• **Donat, Albrecht, Dipl.-Ing.**
  **91462 Dachsbach (DE)**

(54)    **Schaltung zum Generieren eines Resolverausgangssignals**

(57)    Bei einer Lageerfassung mittels Resolver (R) werden die Resolverausgangssignale phasenverschoben vervielfacht und es erfolgt eine zyklische Demodulation zum Bilden eines in Lage angebenden sinus- bzw. cosinusförmigen Ausgangssignals. Durch die Erfindung wird eine einfache, phasenfehlerunempfindliche Möglichkeit zum Erzeugen der zyklischen Schaltsignale angegeben.

EP 0 779 607 A1

**Beschreibung**

Die Erfindung bezieht sich auf eine Schaltung zum Generieren eines cosinusförmigen bzw. eines sinusförmigen Ausgangssignals in Abhängigkeit von der Winkellage eines von einer Trägerfrequenz gespeisten Rotors eines Resolvers, wobei den Sekundärwicklungen des Resolvers als erstes bzw. fünftes Rohsignal ein cosinusförmig bzw. sinusförmig moduliertes Trägerfrequenzsignal entnehmbar ist, wobei aus diesen Signalen durch Inversion ein zweites bzw. sechstes Signal bildbar ist, wobei aus den Rohsignalen durch Phasenverschiebung, insbesondere mit Hilfe jeweils eines Integriergliedes, ein drittes bzw. siebtes Signal bildbar ist und aus diesen Signalen durch Inversion ein viertes bzw. achtes Signal bildbar ist und wobei zyklisch pro Periode der Trägerfrequenz jeweils vier aufeinanderfolgende gleichgroße Zeitfenster aufspannbar sind, in denen über eine Schaltstufe fortlaufend nacheinander das erste bzw. fünfte, das vierte bzw. achte, das zweite bzw. sechste und das dritte bzw. siebte Signal jeweils an einen ersten bzw. zweiten Tiefpaß leitbar sind, an dessen jeweiligem Ausgang dann das cosinusförmige bzw. sinusförmige Ausgangssignal ansteht.

Zur Lageerfassung von bewegten Maschinenteilen und Antrieben haben sich Resolver als zuverlässige und kostengünstige Elemente im industriellen Einsatz bewährt. Vom Arbeitsprinzip hier ist ein Resolver so ausgebildet, daß eine eingangsseitige Erregung mit einem Trägerfrequenzsignal erfolgt, das durch die Resolverbewegung amplitudenmoduliert wird. Demgemäß modulierte Ausgangssignale mit 90° Phasenversatz zueinander stehen dann sozusagen als Rohsignale zur weiteren Auswertung zur Verfügung. Zur Verringerung der trägerfrequenten Welligkeit der Hüllkurven werden die amplitudenmodulierten trägerfrequenten Rohsignale durch Inversion und Phasenverschiebung vervielfacht und anschließend phasenrichtig gleichgerichtet, d.h. demoduliert. Das Umschalten auf die durch die Vervielfachung jeweils gewonnenen Signalzüge erfolgt dabei zyklisch abhängig von der den Resolver erregenden Trägerfrequenz. Der erste Nulldurchgang eines amplitudenmodulierten trägerfrequenten Signals, der auf den positiven Nulldurchgang der Trägerfrequenz folgt, startet den Modulationszyklus. Problematisch ist es dabei allerdings, daß der Nulldurchgang des amplitudenmodulierten trägerfrequenten Signals im Nulldurchgang der Hüllkurve nicht ausgewertet werden kann, weil die Amplitude beliebig klein sein kann. Aus diesem Grund ist man auch bereits dazu übergegangen, bei einem mehrphasigen Resolver jeweils das amplitudenmodulierte trägerfrequente Signal auszuwerten, welches sich gerade nicht im Nulldurchgang der Hüllkurve befindet. Auch dies kann durch eine Auswerteschaltung relativ leicht erfolgen, jedoch muß dazu eine, wenn auch ungenaue Demodulation bereits vorliegen. Demzufolge muß nach dem Einschalten der Demodulationseinrichtung die Auswahlschaltung mit einer vorläufigen und unter Umständen ungenauen Anfangsbedingung starten.

Aufgabe der Erfindung ist es, eine Schaltung der eingangs genannten Art so auszubilden, daß eine einfache und genaue Möglichkeit geschaffen wird, das zyklische Schalten von Signalzug zu Signalzug zum Zwecke der Demodulation zu erreichen.

Gemäß der Erfindung wird diese Aufgabe für eine Schaltung der eingangs genannten Art dadurch gelöst, daß Schaltmittel zum Bilden eines ersten Summensignals der Absolutlage des dritten und siebten Signals vorgesehen sind, daß Schaltmittel zum Bilden eines zweiten Summensignals der Absolutsignale des ersten und vierten Signals vorgesehen sind, daß dann, wenn das erste Summensignal größer als das zweite Summensignal ist, ein Zustand logisch „1" eines Synchronisiersignals auslösbar ist, das andernfalls den Zustand logisch „0" aufweist, und daß jeweils mit einemm Zustandswechsel des Synchronisiersignals die Schaltstufe um eine Schaltstellung weiterschaltbar ist. Diese Auswerteschaltung hat im übrigen auch den Vorteil, sehr unabhängig gegen Phasenverschiebungen des Trägerfrequenzsignals zwischen Ein- und Auskopplung zu sein.

Eine vorteilhafte Ausbildung der Erfindung ist dadurch gekennzeichnet, daß ein Zyklusstart dadurch auslösbar ist, daß eine negative Signalflanke des Synchronisiersignals während der negativen Halbwelle des Trägerfrequenzsignals auftritt. Damit ist ein leichtes Schaltkriterium zum Starten jeweils eines Zyklusses gegeben.

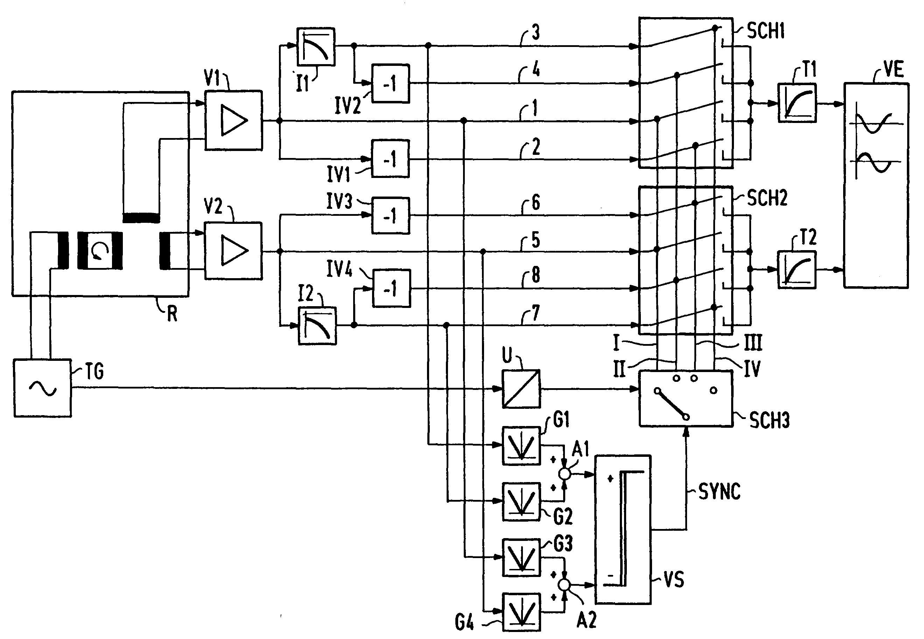

Ein Ausführungsbeispiel der Erfindung ist in der Zeichnung dargestellt und wird im folgenden näher erläutert.

Die Darstellung zeigt in Form eines Blockschaltbildes einen Resolver R, der von einem Trägerfrequenzgenerator mit einer Wechselspannung der Kreisfrequenz $\omega_e$ beaufschlagt ist. Die Trägerfrequenz wird mittels eines wie durch einen gebogenen Pfeil angedeuteten drehbar gelagerten Rotors, der eine Kreisfrequenz $\omega_R$ aufweisen möge, auf Sekundärwicklungen überkoppelt. Die resultierenden Ausgangsspannungen können über Verstärker V1 und V2 verstärkt werden, so daß der Verstärker V1 ein cosinusförmiges verstärktes Rohsignal 1 aufweist, das sich als $(+\sin \omega_e t) \cdot (-\cos \omega_R t) = U\_cos \cdot (+1)$ ergibt.

Mit Hilfe einer Inversionsstufe IV1 wird das Ausgangssignal des Verstärkers V1 invertiert und es ergibt sich ein zweites Signal 2 als $(-\sin \omega_e t) \cdot (-\cos \omega_R t) = U\_cos \cdot (-1)$.

Ferner wird mit Hilfe einer Integrationsstufe I1 das Ausgangssignal des Verstärkers V1 um $90°_{el}$ phasenverschoben und es ergibt sich ein drittes Signal 3 in der Form $(\cos \omega_e t) \cdot (-\cos \omega_R t) = U\_cos\_90 \cdot (+1)$. Auch dieses Signal kann durch eine Inversionsstufe IV2 invertiert werden, so daß sich ein viertes Signal 4 als $(-\cos \omega_e t) \cdot (-\cos \omega_R t) = U\_cos\_90 \cdot (-1)$ ergibt.

Mit Hilfe einer Integrationsstufe I2 und Inverterstufen IV3 und IV4 wird am Ausgang des Verstärkers V2 für das sinusförmige Ausgangssignal gleiches vorgenommen, so daß sich in entsprechender Weise Signale 5, 6, 7 und 8 erge-

2

ben, die den Signalen 1 bis 4 entsprechen, mit dem Unterschied, daß jeweils für „cos" „sin" gesetzt wird und für „sin" „cos" anzusetzen ist.

Die Signale 1 bis 4 gelangen an eine Schaltstufe SCH1, die Signale 5 bis 8 gelangen an eine Schaltstufe SCH2. Wie im folgenden noch erläutert, erfolgt die Demodulation durch zyklisches Schalten mit Demodulationsfolgen I, II, III und IV und das Ausgangssignals der Schaltstufe SCH1 wird nach erfolgter Demodulation über einen Tiefpaß T1 geglättet und liefert das cosinusförmige Ausgangssignal an weitere Verarbeitungseinrichtungen V1, während die Schaltstufe SCH2 die Demodulation für das sinusförmige Ausgangssignal bewirkt, das über einen Tiefpaß T2 geglättet wird. Diese Schaltstufen SCH1 und SCH2 werden über eine Schaltstufe SCH3 nacheinander zyklisch so angesteuert, daß in der Schaltstellung I die Signale 1 und 5 durchgeschaltet werden, daß in der Schaltstellung II die Signale 4 und 8 durchgeschaltet werden, in der Schaltstufe III die Signale 2 und 6 geschaltet werden und in der Schaltstufe IV die Signale 3 und 7 an die Tiefpässe T1 und T2 weitergeleitet werden.

Wesentlich für die vorliegende Erfindung ist nun die Art und Weise, wie ein Fortschalten der Schaltstufe SCH3 erfolgt. Dazu werden das Signal 3 bzw. das Signal 7 an einen Gleichrichter G1 bzw. einen Gleichrichter G2 geleitet und die Ausgangssignale der Gleichrichter G1 und G2 werden in einer Additionsstufe A1 addiert. Ferner gelangen die Signale 1 bzw. 5 an die Gleichrichter G3 bzw. G4 und die Ausgangssignale der Gleichrichter G4 bzw. G5, d.h. die Absolutwerte der Signale werden in einer Additionsstufe A2 addiert.

Am Ausgang der Additionsstufe A1 steht damit ein erstes Summensignal an, das dem nicht invertierenden Eingang einer Vergleichsstufe VS zugeleitet wird, am Ausgang der zweiten Additionsstufe steht ein zweites Summensignal an, das dem invertierenden Ausgang der Vergleichsstufe VS zugeleitet wird. Als Ausgangssignal der Vergleichsstufe VS ergibt sich damit ein logisches Signal

$$\text{SYNC} = |U\_sin\_90| + |U\_cos\_90| > |U\_sin| + |U\_cos|$$

Mit jedem Flankenwechsel des Ausgangssignals SYNC der Vergleichsstufe VS wird die Schaltstufe SCH3 jeweils zyklisch von der Schaltstellung I in die Schaltstellung II, III und IV und von dort in die Schaltstellung eins bewegt.

Gestartet werden die Zyklusse in der Schaltstufe SCH3 dadurch, daß ein Umsetzer U detektiert, ob eine positive oder negative Halbwelle der Trägerfrequenzsignale des Taktgebers TG vorliegt. Demgemäß wird ein Binärsignal vom Umsetzer U an die Schaltstufe SCH3 weitergeleitet. Dort wird die folgende logische Verknüpfung getroffen, daß dann, wenn eine negative Signalflanke des Synchronisiersignals SYNC während der negativen Halbwelle des Trägerfrequenzsignals auftritt, der Zyklus in der Schaltstellung I gestartet wird. Dieses Starten muß mindestens einmal erfolgen, kann jedoch auch sicherheitshalber fortlaufend im Betrieb erfolgen, wo es mit dem Weiterschalten von Schaltstellung IV nach I korrespondiert.

Das der Erfindung zugrundeliegende Prinzip kann selbstverständlich auch auf Resolver mit anderen Phasenzahlen als beim Ausführungsbeispiel übertragen werden. Denkbar ist auch die Anwendung der Erfindung auf andere Signalvervielfachungen als im Beispiel angenommen.

**Patentansprüche**

1. Schaltung zum Generieren eines cosinusförmigen bzw. eines sinusförmigen Ausgangssignals in Abhängigkeit von der Winkellage eines von einer Trägerfrequenz gespeisten Rotors eines Resolvers, wobei den Sekundärwicklungen des Resolvers als erstes bzw. fünftes Rohsignal ein cosinusförmig bzw. sinusförmig moduliertes Trägerfrequenzsignal entnehmbar ist, wobei aus diesen Signalen durch Inversion ein zweites bzw. sechstes Signal bildbar ist, wobei aus den Rohsignalen durch Phasenverschiebung, insbesondere mit Hilfe jeweils eines Integriergliedes, ein drittes bzw. siebtes Signal bildbar ist und aus diesen Signalen durch Inversion ein viertes bzw. achtes Signal bildbar ist und wobei zyklisch pro Periode der Trägerfrequenz jeweils vier aufeinanderfolgende gleichgroße Zeitfenster aufspannbar sind, in denen über eine Schaltstufe fortlaufend nacheinander das erste bzw. fünfte, das vierte bzw. achte, das zweite bzw. sechste und das dritte bzw. siebte Signal jeweils an einen ersten bzw. zweiten Tiefpaß leitbar sind, an dessen jeweiligem Ausgang dann das cosinusförmige bzw. sinusförmige Ausgangssignal ansteht, **dadurch gekennzeichnet,** daß Schaltmittel (G1,G2,A1) zum Bilden eines ersten Summensignals der Absolutsignale des dritten (3) und siebten Signals (7) vorgesehen sind, daß Schaltmittel (G3,G4,A2) zum Bilden eines zweiten Summensignals der Absolutsignale des ersten (1) und vierten Signals (4) vorgesehen sind, daß dann, wenn das erste Summensignal größer als das zweite Summensignal ist, ein Zustand logisch „1" eines Synchronisiersignals (SYNC) auslösbar ist, das andernfalls den Zustand logisch „0" aufweist, und daß jeweils mit einem Zustandswechsel des Synchronisiersignals (SYNC) die Schaltstufe (SCH1,SCH2,SCH3) um eine Schaltstellung weiterschaltbar ist.

2. Schaltung nach Anspruch 1, **dadurch gekennzeichnet,** daß ein Zyklusstart jeweils dadurch auslösbar ist, daß eine negative Signalflanke des Synchronisiersignals (SYNC) während der negativen Halbwelle des Trägerfrequenzsignals auftritt.

EP 0 779 607 A1

EP 0 779 607 A1

Europäisches
Patentamt

**EUROPÄISCHER RECHERCHENBERICHT**

Nummer der Anmeldung

EP 96 11 9215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 557 554 (SIEMENS AG) 1.September 1993 * Seite 2, Spalte 2, Zeile 26 - Seite 3, Spalte 3, Zeile 45; Abbildung 1 * --- | 1 | G08C19/46 |
| A | WO-A-90 15968 (SIEMENS AG) 27.Dezember 1990 * Seite 5, Zeile 31 - Seite 9, Zeile 30; Abbildungen 1-4 * --- | 1 | |
| X,P | DE-U-295 19 716 (SIEMENS AG) 25.Januar 1996 * das ganze Dokument * ----- | 1,2 | |

RECHERCHIERTE SACHGEBIETE (Int.Cl.6)

G08C

Der vorliegende Recherchenbericht wurde für alle Patentansprüche erstellt

| Recherchenort | Abschlußdatum der Recherche | Prüfer |
|---|---|---|
| DEN HAAG | 21.Januar 1997 | Wanzeele, R |